# EUROPEAN PATENT SPECIFICATION

(11) **EP 4 300 295 B1**
(45) Date of publication and mention of the grant of the patent: **18.03.2026**
(21) Application number: 21933838.1
(22) Date of filing: 31.03.2021
(51) Int. Cl.: G06F 9/44, G05B 19/042, G06Q 10/06

(54) **METHOD AND APPARATUS FOR EXECUTING WORKFLOW TASK ACROSS CONTROL OBJECTS**
VERFAHREN UND VORRICHTUNG ZUR AUSFÜHRUNG EINER ARBEITSFLUSSAUFGABE ÜBER STEUEROBJEKTE HINWEG
PROCÉDÉ ET APPAREIL POUR EXÉCUTER UNE TÂCHE DE FLUX DE TRAVAIL À TRAVERS DES OBJETS DE COMMANDE

(43) Date of publication of application: 03.01.2024
(73) Proprietor: Siemens Aktiengesellschaft, 80333 München (DE)
(72) Inventor: ZHU, Yipeng, 210000 Nanjing, Jiangsu Province (CN); WU, Jianqiang, 200120 Shanghai (CN)
(74) Representative: Isarpatent
(86) International application number: PCT/CN2021/084678
(87) International publication number: WO 2022/205173

(56) References cited:
- CN-A- 1 834 906
- CN-A- 102 236 679
- CN-A- 103 942 722
- CN-A- 107 103 448
- CN-A- 110 609 675
- US-A1- 2007 074 182
- US-A1- 2013 067 476
- US-B1- 10 803 413

## Description

### Technical field

The present disclosure relates to the field of automated systems, in particular to a method and apparatus for executing a workflow task across control objects, a computing device, a non-transitory machine-readable storage medium, a computer program and a computer program product.

### Background art

At present, automated system providers generally provide programming tools (engineering tools) to users to arrange workflow tasks for control objects (e.g. robots, etc.), while the programming tools require a specific runtime environment or executor to perform the workflow tasks provided by the programming tools, for example, to control robot movement. Thus,
a runtime executor cooperating with the programming tool is needed to interpret the user objective and control the relevant control object.

For example, 4DIAC-RTE (FORTE) provides a small portable C++ implementation of a runtime environment conforming to the IEC 61499 standard, and supports the execution of distributed control programs on small embedded devices. However, such an implementation has the following shortcomings: it cannot define function blocks dynamically, and the runtime executor needs to be re-compiled when a new function is added; a new standard needs to be constructed for openness, resulting in poor openness; a function block error will cause collapse of the execution process, so stability is inadequate; the execution logic cannot be textualized, making version control difficult; execution data cannot be easily visualized; and the programming efficiency is low from the perspective of the user (e.g. engineering and technical personnel) because function blocks are defined by C++.
US 2007/074182 A1 relates to systems, methods, and apparatus for modelling, specifying, and deploying policies in autonomous and autonomic systems.
US 10803413 B1 relates to a workflow service designed to handle the translation, validation, and execution of workflows defined in multiple domain-specific languages (DSLs).
CN 110609675 A relates to a workflow modelling method and apparatus aimed at network function virtualization (NFV).

### Summary of the invention

To solve the abovementioned problems in the prior art, the present disclosure provides a solution for executing workflow tasks across control objects. By providing an interpretable and executable textual description for workflow tasks, the solution can create function blocks dynamically without the need for re-compiling, thus increasing the programming efficiency for the user and providing good version control.

According to a first aspect of the present invention, a method for executing a workflow task across control objects according to claim 1 is provided.

According to a second aspect of the present invention, a system for executing a workflow task across control objects according to claim 6 is provided.

According to a third aspect of the present invention, a non-transitory machine-readable storage medium according to claim 11 is provided.

According to a fourth aspect of the present invention, a computer program according to claim 12 is provided.

According to a fifth aspect of the present invention, a computer program product according to claim 13 is provided.

### Brief description of the drawings

The features, advantages and other aspects of embodiments of the present disclosure will become more obvious with reference to the drawings and the detailed description below. Embodiments of the present disclosure are shown here in an exemplary but non-limiting manner. In the drawings:
Fig. 1 shows an exemplary system in which a workflow task may be executed across control objects according to embodiments of the present disclosure.
Fig. 2 shows an exemplary apparatus for executing a workflow task across control objects, which is included in the system in Fig. 1.
Fig. 3 shows a flow chart of an exemplary method of a method for executing a workflow task across control objects according to embodiments of the present disclosure.
Fig. 4 shows an illustration of an exemplary workflow task according to embodiments of the present disclosure.
Fig. 5 shows an exemplary text-based script according to embodiments of the present disclosure.
Fig. 6 shows a block diagram of an exemplary computing device for executing a workflow task across control objects according to embodiments of the present disclosure.

### Detailed description of the invention

Exemplary embodiments of the present disclosure are described in detail below with reference to the drawings. Although the exemplary methods and apparatuses described below include software and/or firmware executed on hardware in other components, it should be noted that these examples are merely illustrative and should not be regarded as limiting. For example, it is considered that any or all hardware, software and firmware components may be implemented in hardware exclusively, in software exclusively, or in any combination of hardware and software. Thus, although exemplary methods and apparatuses have already been described below, those skilled in the art will easily understand that the examples provided are not intended to limit the way in which these methods and apparatuses are implemented.

Furthermore, the flow charts and block diagrams in the drawings show possible system architectures, functions and operations of the method and system according to embodiments of the present disclosure. It should be noted that the functions marked in the boxes may also take place in a different order from that marked in the drawings. For example, two boxes shown consecutively may in fact be executed essentially in parallel, or sometimes may also be executed in reverse order, depending on the functions concerned. It should also be noted that each box in the flow charts and/or block diagrams, and combinations of boxes in the flow charts and/or block diagrams, may be implemented using a dedicated hardware-based system that executes specified functions or operations, or may be implemented using a combination of dedicated hardware and computer instructions.

The terms "comprises", "includes" and similar terms used herein are open terms, i.e. "comprises/includes but is not limited to", meaning that other content may also be included. The term "based on" is "at least partly based on". The term "an embodiment" means "at least one embodiment"; and the term "another embodiment" means "at least one other embodiment", and so on.

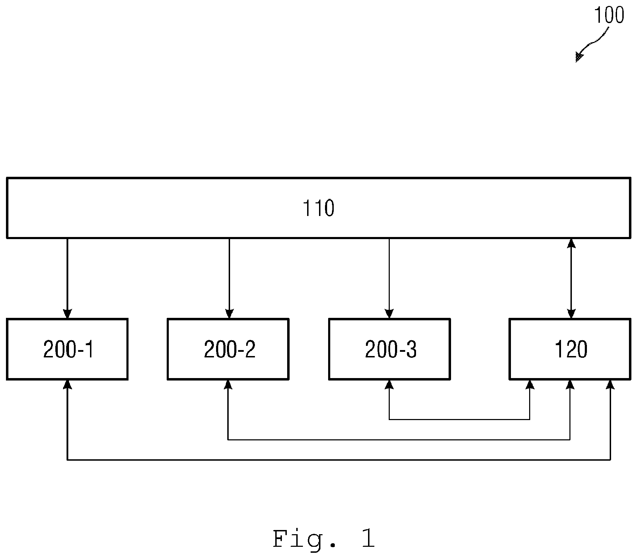

Fig. 1 shows an exemplary system 100 in which a workflow task may be executed across control objects. The exemplary system 100 comprises a programming tool 110, middleware 120, and multiple runtime executors 200-1, 200-2, 200-3. The programming tool 110 running on, for example, an engineering station host may write a workflow task for execution across at least one control object by means of an interactive human-machine interface (HMI) for example, generate workflow description data according to the workflow task, and then send the workflow description data to the runtime executors 200-1, 200-2, 200-3 via a wireless or wired connection for example. The runtime executors 200-1, 200-2, 200-3 may convert the received workflow description data to a script which is based on textual description and executable by a script engine (e.g. Python, CPython, Nodejs engines, etc.) and execute the script, in order to realize the workflow task. The different runtime executors 200-1, 200-2, 200-3 may be implemented in the form of software or hardware, and run on the same device (e.g. distinguished by different ports) or run on different devices.

The middleware 120 may communicate with the programming tool 110 and the runtime executors 200-1, 200-2, 200-3, to realize control scheduling and data transmission thereamong, so the middleware 120 serves as a data bus between the programming tool 110 and the runtime executors, and between the runtime executors.

It should be understood that the quantities of programming tool(s), middleware and runtime executor(s) in Fig. 1 are merely examples; in other examples, the quantities of programming tool(s), middleware and runtime executor(s) may be other suitable quantities. For example, the runtime executors may receive workflow task description data conforming to a standard format (e.g. IEC 61499 or another possible future open standard, etc.) from multiple programming tools of different types, and covert this data to an executable script.

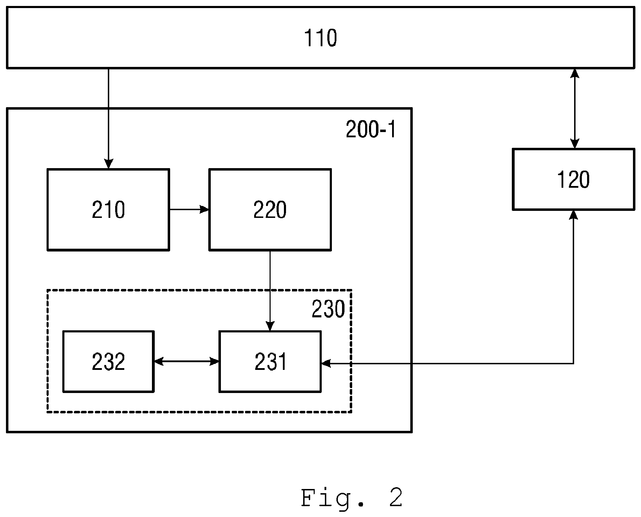

Fig. 2 shows an exemplary apparatus 200-1 for executing a workflow task across control objects, which is included in the system 100 in Fig. 1. The exemplary apparatus 200-1 comprises a communication interface (not shown), a parser 210, a script generator 220 and a script engine module 230. The communication interface of the exemplary apparatus 200-1 is configured to receive, from the programming tool 110, workflow description data associated with a workflow task executed across at least one control object, and provide the workflow description data to the parser 210. The parser 220 is configured to extract, from the workflow description data, a workflow task model associated with the at least one control object. The script generator 220 is configured to generate, on the basis of the workflow task model, a text-based script for realizing the workflow task, and provide the script to the script engine module 230. The script engine module 230 is configured to interpret and execute the generated script.

In an example, the apparatus 200-1 may communicate with the programming tool 110 via the middleware 120 to realize monitoring and control of an execution process of the workflow task, and this may comprise at least one of the following: the script engine module 230 being configured to map, to the middleware 120, state data and process data relating to the execution process, so that the programming tool 110 can acquire the state data and process data; the script engine module 230 being configured to receive control information relating to the execution process from the programming tool 110 via the middleware 120. Communicative interaction between the apparatus 200-1 and the programming tool 110 is provided by means of the middleware 120; system decoupling can be realized, and the arrangement is suitable for a distributed control system, and the middleware can be changed flexibly according to performance needs - for example, the middleware may be realized as a real-time data bus (e.g. DDS) to ensure real-time data transmission. For example, the script engine module 230 may publish, to the middleware 120, state data and process data to which the programming tool 110 subscribes (e.g. state data of function blocks, control objects and execution processes (e.g. run, stop, execute to which point in the process, execution time, etc.) and process data (e.g. data generated by function blocks and control objects during execution, etc.)), based on a publish-subscribe relationship or information. For example, the script engine module 230 is configured to receive control information relating to the execution process from the programming tool 110 via the middleware 120, to control the execution of the process (e.g. at which point and what time to stop or continue execution, restart, abnormal processing, etc.); for example, based on state data and process data acquired from the script engine 230 of the runtime executor 200-1 via the middleware 120, the programming tool 110 may generate control information to reverse-control the execution of the process. Because the programming tool 110 can exchange data with the runtime executor conveniently via the middleware 120, the acquired state and process data can be easily displayed in the HMI; thus, compared with existing implementations such as FORTE, there is no need to additionally write data communication with the C++ language, and the problems of difficulty of data visualization and low programming efficiency are solved.

According to the invention, the workflow task model describes multiple function blocks associated with at least one control object, and a connection relationship between the multiple function blocks. The parser 210 parses function blocks (nodes) and a connection relationship between the function blocks from the workflow description data; each function block is associated with a specific runtime executor and control object, and the connection relationship between the function blocks indicates a collaborative relationship between the runtime executors. The function blocks described by means of the workflow task model may have, for example, inputs/outputs and function logic (e.g. events, etc.).

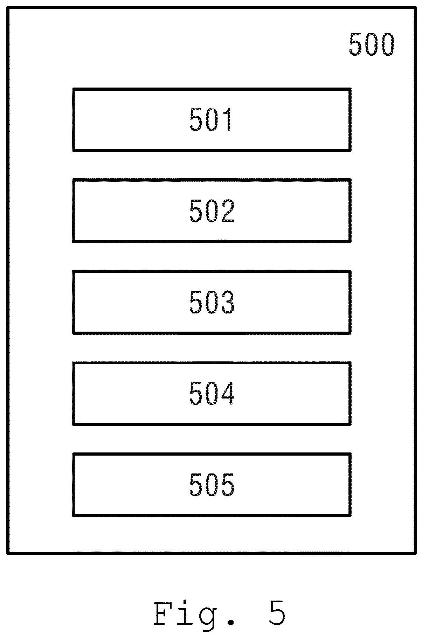

In an example, the script may comprise: a textual description of an imported function block, a textual description of an overloaded function block, a textual description of function block parameter settings, and a textual description of event scheduling. Details of the textualized script are described in detail below with reference to Fig. 5.

In an example, the script engine module 230 may be configured to instantiate, on a virtual machine 230, a function block associated with at least one control object and execute the function block. For example, the script engine module 230 may be a high-level language engine such as Python, CPython or Nodejs, and instantiates the function block by calling, on the virtual machine 230, a module (which may be an existing one or provided by the automation system provider) corresponding to the control object. In addition, the script engine module 230 may instantiate the function block by calling and/or downloading, on the virtual machine 230, a module (which may be provided by a third party) from an engine's community library and ecosystem, thereby greatly reducing the difficulty of user development. For example, if the user wishes to add to a workflow task a module (e.g. a modbus module) for controlling a PLC, but is not familiar with the module, he may self-define a function to directly download the modbus module provided by the community library and ecosystem and import same into the runtime executor to realize the relevant business logic. Using various mature script engines and their built-in virtual machine mechanisms and ecosystems, execution process collapse caused by function block or module errors can be avoided, and openness is good, so compared with existing implementations such as FORTE, the problems of poor openness and inadequate stability can be solved.

In an example, the at least one control object comprises a first control object and a second control object operated in cooperation; moreover, the script engine module 230 is a first script engine module on a first runtime executor 200-1 and is configured to execute a script associated with the first control object, and a script associated with the second control object is executed by means of a second script engine module on a second runtime executor (e.g. 200-2 or 200-3); control object scheduling between the first runtime executor 200-1 and second runtime executor (e.g. or 200-3) is realized by means of the middleware 120. In an existing implementation such as FORTE, cooperative scheduling between multiple runtime executors must be realized by explicitly adding a protocol communication module (e.g. a socket communication module, such as paired socket publish and subscribe modules, etc.); in comparison, the present disclosure avoids the need to explicitly add a protocol communication module by providing middleware, so that the user does not need to be concerned about how protocol communication between runtime executors is realized.

In an example, the workflow description data is generated according to the IEC 61499 standard. The IEC 61499 standard is a standard published by the International Electrotechnical Commission for distributed industrial process measurement and control systems (IPMCS). Interoperability between different manufacturers' devices may be resolved by providing a data format that rigorously conforms to the IEC standard. In other examples, the workflow description data may conform to a standard format, e.g. a data format of various existing open standards or possible future open standards, etc.

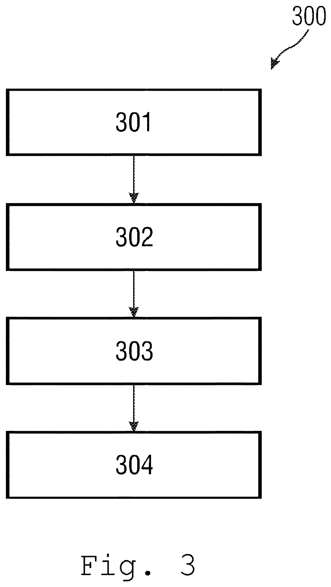

Fig. 3 shows a flow chart of an exemplary method 300 of a method for executing a workflow task across control objects according to embodiments of the present disclosure. The method 300 may be realized by any runtime executor 200-1, 200-2 or 200-3, for example those in Fig. 1 or Fig. 2.

As shown in Fig. 3, the method 300 starts at step 301. In step 301, workflow description data associated with a workflow task executed across at least one control object is received from a programming tool. For example, step 301 may be performed by the communication interface of the apparatus 200-1 as shown in Fig. 2.

In an example, the workflow description data is generated according to the IEC 61499 standard.

Next, the method 300 proceeds to step 302. In step 302, a workflow task model associated with at least one control object is extracted from the workflow description data. For example, step 302 may be performed by the parser 210 of the apparatus 200-1 as shown in Fig. 2.

In an example, the workflow task model describes multiple function blocks associated with at least one control object, and a connection relationship between the multiple function blocks.

Next, the method 300 proceeds to step 303. In step 303, based on the workflow task model, a text-based script for realizing the workflow task is generated. For example, step 303 may be performed by the script generator 220 of the apparatus 200-1 as shown in Fig. 2.

In an example, step 303 may comprise: generating a textual description of an imported function block, a textual description of an overloaded function block, a textual description of function block parameter settings, and a textual description of event scheduling.

Next, the method 300 proceeds to step 304. In step 304, the script is interpreted and executed by means of a script engine. For example, step 304 may be performed by the script engine module 230 of the apparatus 200-1 as shown in Fig. 2.

In an example, step 304 may comprise: instantiating, on a virtual machine, a function block associated with at least one control object, and executing the function block.

In an example, the method 300 may further comprise the following step: communicating with the programming tool via middleware to realize visual monitoring and control of an execution process of the workflow task; this may comprise at least one of the following: mapping, to the middleware, state data and process data relating to the execution process by means of the script engine, so that the programming tool acquires the state data and process data; receiving control information relating to the execution process from the programming tool via the middleware by means of the script engine. For example, this step may be performed by the script engine module 230 of the apparatus 200-1 as shown in Fig. 2.

In an example, the at least one control object may comprise a first control object and a second control object operated in cooperation, and the step of interpreting and executing the script by means of the script engine may comprise: executing a script associated with the first control object by means of a first script engine on a first runtime executor, and executing a script associated with the second control object by means of a second script engine on a second runtime executor; and the method 300 may further comprise: realizing, by means of middleware, control object scheduling between the first runtime executor and the second runtime executor.

The apparatus and method for executing a workflow task across control objects as described in accordance with Figs. 2 and 3 has the following advantages: by providing an interpretable and executable text-based script for a workflow task, function blocks can be dynamically created without the need for re-compiling, so user programming efficiency is improved and good version control is provided; by providing middleware to better support data exchange, data visualization can be easily realized and programming efficiency can be easily improved; and by providing a mature script engine and its built-in virtual machine mechanism and ecosystem, good openness and stability can be provided.

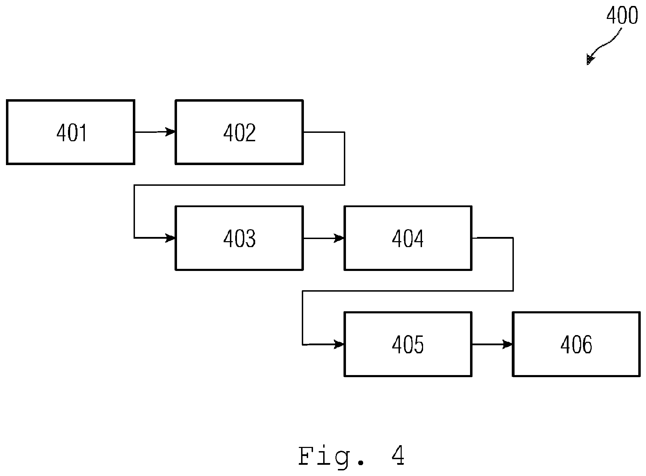

Fig. 4 shows an illustration of an exemplary workflow task 400 according to embodiments of the present disclosure. As shown in Fig. 4, using a programming tool (e.g. the programming tool 110), in one scenario the user can realize system configuration of a robot arm and gripper by dragging and dropping multiple function blocks 401, 402, 403, 404, 405, 406. Function blocks 401 and 406 respectively represent "Start" and "Done" of the workflow task 400, function blocks 402 and 404 are executed by a runtime executor (e.g. Runtime1) associated with the robot arm and respectively represent Robot_Init and Robot_Move, and function blocks 403 and 405 are executed by a runtime executor (e.g. Runtime2) associated with the gripper and respectively represent Gripper_Init and Gripper_Move. The connections between the multiple function blocks 401 - 406 represent the cooperative relationships therebetween; for example, the output of function block 401 is "done", the input of function block 406 is "done", and each of the function blocks 402 - 405 has "start" as input and "done" as output. That is to say, the function blocks 401 - 406 and their connections show the cooperation of the robot arm and gripper to realize a process of positioning an object for example, and the robot arm and gripper need to be operated in cooperation. As stated above, cooperative scheduling between different runtime executors may be realized by means of middleware. The parser of the runtime executor may extract a workflow task model from workflow description data relating to the workflow task, wherein the workflow task model describes multiple function blocks associated with at least one control object (e.g. the robot arm or gripper) and a connection relationship between the multiple function blocks. For example, the workflow task 400 may be parsed by means of nodes and links; the function block relating to Robot_Init is converted to a function block node, and the connecting line between function blocks 401 and 402 will be converted to a link having a starting point (Start.done) and an end point (Robot_Init.start).

Fig. 5 shows an exemplary text-based script 500 according to embodiments of the present disclosure. For example, the script 500 may be generated by the script generator 220 of the apparatus 200-1 shown in Fig. 2. The script 500 may comprise a textual description 501 of an imported function block, a textual description 502 of an overloaded function block, a textual description 503 of function block parameter settings, a textual description 504 of event scheduling, and an optional other textual description 505 (e.g. thread security, process control, etc.).

The pseudocode below provides an example of a textual description 501 of an imported function block:

```
       LOAD BUS
       DEF CLASS FB:
       PRIVATE:
             NAME : STRING
             STATIC_DESCRIPTION_=
 {"IN_EVENT":[],"OUT_EVENT":[],"DATA_IN":[],"DATA_OUT":[]}
             CONSTRUCTOR (NAME) :
                      SELF.NAME ← NAME;
                      For EVENT IN DESCRIPTION:
                           BUS. SUBSCRIBE (EVENT)
       PUBLIC
             DEF INPUT_IN1:
                      CALL OUTPUT_OUT1
             DEF INTPUT_IN2:
                      CALL OUTPUT_OUT2
             DEF GET_PORT_TYPE(PORTNAME):
                      RETURN PORT_TYPE
       END_DEF CLASS
```

The pseudocode below provides an example of a textual description 502 of an overloaded function block, e.g. the output realization of an overloaded function block:

```
       Load FB;
       CLASS FB_IMPLEMENT:FB
       DEF OUTPUT_OUT1:
          BUS.publish(SELF.NAME, OUT1);
       DEF OUTPUT_OUTPUT2:
          BUS.publish(SELF.NAME, OUT2);
```

The pseudocode below provides an example of a textual description 503 of function block parameter settings, e.g. a bus setting default parameter values of a function block:

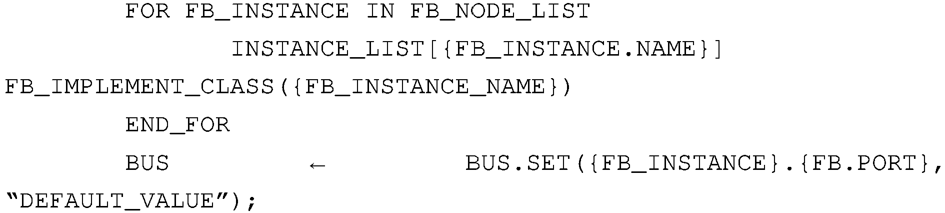

The pseudocode below provides an example of a textual description 504 of event scheduling, e.g. bus event scheduling:

```
       DEF RUN:
            REGISER_SYSQUIT
            BUS.PUBLISH_START
            FOR SIGNAL IN BUS.TOPIC:
                  IF SIGNAL IS MATCHED INPUT_EVENT:
                      CALL CURRENT_FB.EVENT_METHOD()
                  IF SIGNAL IS MATCHED OUTPUT_EVENT:
                      BUS.PUBLIS(NEXT_FB.INEVNT)
 
```

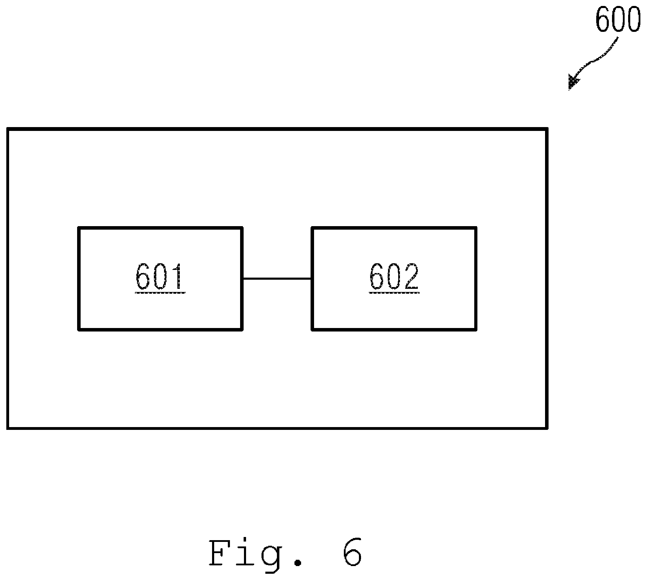

In the present disclosure, the apparatuses 200-1, 200-2, 200-3 for executing a workflow task across control objects may be realized by a computing device. Fig. 6 shows a block diagram of an exemplary computing device 600 for executing a workflow task across control objects according to embodiments of the present disclosure. According to an embodiment, the computing device 600 may comprise a processor 601, wherein the processor 601 executes at least one computer-readable instruction stored or encoded in a computer-readable storage medium (i.e. a memory 602).

In an embodiment, a computer-executable instruction is stored in a memory 602, and when the computer-executable instruction is executed, at least one processor 601 is caused to: receive, from a programming tool, workflow description data associated with a workflow task executed across at least one control object; extract, from the workflow description data, a workflow task model associated with the at least one control object; based on the workflow task model, generate a text-based script for realizing the workflow task; and interpret and execute the script by means of a script engine.

It should be understood that the computer-executable instruction stored in the memory 602, when executed, causes at least one processor 601 to perform various operations and functions of the method and apparatus described above with reference to Figs. 1 - 5 in embodiments of the present disclosure.

According to an embodiment, a non-transitory machine-readable medium is provided. The non-transitory machine-readable medium may have a machine-executable instruction which, when executed by at least one processor, causes the machine to perform various operations and functions of the method and apparatus described above with reference to Figs. 1 - 5 in embodiments of the present disclosure.

According to an embodiment, a computer program is provided, comprising a computer-executable instruction which, when executed causes at least one processor to perform various operations and functions of the method and apparatus described above with reference to Figs. 1 - 5 in embodiments of the present disclosure.

According to an embodiment, a computer program product is provided, comprising a computer-executable instruction which, when executed, causes at least one processor to perform various operations and functions of the method and apparatus described above with reference to Figs. 1 - 5 in embodiments of the present disclosure.

In general, exemplary embodiments of the present disclosure may be implemented in hardware or dedicated circuitry, software, firmware, logic, or any combination thereof. Some aspects may be implemented in hardware, while other aspects may be implemented in firmware or software executable by a controller, microprocessor or other computing device. When aspects of embodiments of the present disclosure are illustrated or described as block diagrams/flow charts or represented using other graphic forms, it will be understood that the boxes, apparatuses, systems, techniques or methods described here may be implemented as non-limiting examples in hardware, software, firmware, dedicated circuitry or logic, general-purpose hardware or controllers or other computing devices, or combinations thereof.

A computer-readable program instruction or computer program product used to execute embodiments of the present disclosure may also be stored in the Cloud; when it needs to be called, the computer-readable program instruction stored in the Cloud and used to execute an embodiment of the present disclosure can be accessed by a user via mobile internet, a fixed network or another network, so as to implement the technical solution disclosed in accordance with embodiments of the present disclosure.

The particular implementations expounded above with reference to the drawings describe exemplary embodiments, but do not represent all embodiments that can be realized or fall within the scope of protection of the claims. The terms "exemplary" used throughout this Description means "used as an example, instance or illustration", but does not mean "preferred" or "advantageous" compared with another embodiment. With the aim of providing understanding of the techniques described, particular implementations include specific details. However, these techniques may be implemented without these specific details. In some instances, to avoid making the concepts of the described embodiments difficult to understand, well known structures and apparatuses are shown in the form of block diagrams.

## Claims

1. A method (300) for executing in a system a workflow task across control objects, the system comprising a programming tool and multiple runtime executors (200), wherein each runtime executor comprises a communication interface, a parser (210), a script generator (220) and a script engine module (230), the method comprising:
receiving (S301), from the programming tool, workflow description data associated with a workflow task executed across at least one control object of the control objects;
extracting (S302), from the workflow description data, a workflow task model associated with the at least one control object,
wherein the workflow task model describes multiple function blocks associated with the at least one control object, and a connection relationship between the multiple function blocks,
wherein the parser (210) parses the function blocks and the connection relationship between the function blocks from the workflow description data,
wherein each function block is associated with a specific runtime executor of the multiple runtime executors and a control object of the control objects, and the connection relationship between the function blocks indicates a collaborative relationship between the runtime executors;
generating (S303), by the script generator (220), on the basis of the workflow task model, a text-based script for realizing the workflow task; and
interpreting and executing (S304), by the script engine module (230), the script by means of a script engine (230).

2. The method as claimed in claim 1, further comprising:
communicating with the programming tool via middleware (120) to realize visual monitoring and control of an execution process of the workflow task; this comprises at least one of the following:
mapping, to the middleware (120), state data and process data relating to the execution process by means of the script engine (230), so that the programming tool acquires the state data and the process data;
receiving control information relating to the execution process from the programming tool via the middleware (120) by means of the script engine (230).

3. The method as claimed in claim 1 or 2, wherein the step of generating, on the basis of the workflow task model, a text-based script for realizing the workflow task, comprises: generating a textual description of an imported function block, a textual description of an overloaded function block, a textual description of function block parameter settings, and a textual description of event scheduling.

4. The method as claimed in claim 1 or 2, wherein the step of interpreting and executing the script by means of a script engine (230) comprises: instantiating, on a virtual machine, a function block associated with the at least one control object, and executing the function block.

5. The method as claimed in claim 1, wherein the at least one control object comprises a first control object and a second control object operated in cooperation, and wherein
the step of interpreting and executing the script by means of a script engine (230) comprises: executing a script associated with the first control object by means of a first script engine on a first runtime executor, and executing a script associated with the second control object by means of a second script engine on a second runtime executor; and
the method further comprises: realizing, by means of middleware, control object scheduling between the first runtime executor and the second runtime executor.

6. A system (100) for executing a workflow task across control objects, comprising: a programming tool and multiple runtime executors (200), wherein each runtime executor comprises:
a communication interface, configured to receive, from a programming tool, workflow description data associated with a workflow task executed across at least one control object of the control objects;
a parser (210), configured to extract, from the workflow description data, a workflow task model associated with the at least one control object,
wherein the workflow task model describes multiple function blocks associated with the at least one control object, and a connection relationship between the multiple function blocks,
wherein the parser (210) is further configured to parse the function blocks and the connection relationship between the function blocks from the workflow description data,
wherein each function block is associated with a specific runtime executor of the multiple runtime executors and a control object of the control objects, and the connection relationship between the function blocks indicates a collaborative relationship between the runtime executors;
a script generator (220), configured to generate, on the basis of the workflow task model, a text-based script for realizing the workflow task; and
a script engine module (230), configured to interpret and execute the script.

7. The apparatus as claimed in claim 6,
wherein the apparatus communicates with the programming tool via middleware (120) to realize monitoring and control of an execution process of the workflow task, and this comprises at least one of the following:
the script engine module (230) being configured to map, to the middleware, state data and process data relating to the execution process, so that the programming tool acquires the state data and the process data;
the script engine module being configured to receive control information relating to the execution process from the programming tool via the middleware.

8. The apparatus as claimed in claim 6 or 7, wherein the at least one control object comprises a first control object and a second control object operated in cooperation, and wherein
the script engine module is a first script engine module on a first runtime executor and is configured to execute a script associated with the first control object, and a script associated with the second control object is executed by means of a second script engine module on a second runtime executor; and
control object scheduling between the first runtime executor and the second runtime executor is realized by means of middleware.

9. The apparatus as claimed in any one of claim 6 to 8, wherein the script comprises: a textual description of an imported function block, a textual description of an overloaded function block, a textual description of function block parameter settings, and a textual description of event scheduling.

10. The apparatus as claimed in any one of claim 6 to 9, wherein the script engine module (230) is configured to instantiate, on a virtual machine, a function block associated with the at least one control object, and execute the function block.

11. A non-transitory machine-readable storage medium, having stored thereon an executable instruction which, when executed, causes at least one processor to execute the method as claimed in any one of claims 1 - 5.

12. A computer program, comprising a computer-executable instruction which, when executed, causes at least one processor to execute the method as claimed in any one of claims 1 - 5.

13. A computer program product, tangibly stored on a computer-readable storage medium and comprising a computer-executable instruction which, when executed, causes at least one processor to execute the method as claimed in any one of claims 1 - 5.

## Patentansprüche

1. Verfahren (300) zum Ausführen einer Workflow-Aufgabe in einem System über Steuerobjekte hinweg, wobei das System ein Programmierwerkzeug und mehrere Runtime Executoren (200) umfasst, wobei jeder Runtime Executor eine Kommunikationsschnittstelle, einen Parser (210), einen Skriptgenerator (220) und ein Skript-Engine-Modul (230) umfasst, wobei das Verfahren Folgendes umfasst:
Empfangen (S301) von dem Programmierwerkzeug Daten der Workflow-Beschreibung, die einer Workflow-Aufgabe zugeordnet sind, die über mindestens ein Steuerobjekt der Steuerobjekte ausgeführt wird;
Extrahieren (S302) eines Workflow-Aufgabenmodells, das dem mindestens einen Steuerobjekt zugeordnet ist, aus den Daten der Workflow-Beschreibung,
wobei das Workflow-Aufgabenmodell mehrere Funktionsblöcke beschreibt, die dem mindestens einen Steuerobjekt zugeordnet sind, und eine Verbindungsbeziehung zwischen den mehreren Funktionsblöcken,
wobei der Parser (210) die Funktionsblöcke und die Verbindungsbeziehung zwischen den Funktionsblöcken aus den Daten der Workflow-Beschreibung analysiert,
wobei jeder Funktionsblock einem spezifischen Runtime Executor der mehreren Runtime Executoren und einem Steuerobjekt der Steuerobjekte zugeordnet ist und die Verbindungsbeziehung zwischen den Funktionsblöcken eine kollaborative Beziehung zwischen den Runtime Executoren angibt;
Erzeugen (S303) durch den Skriptgenerator (220) auf der Grundlage des Workflow-Aufgabenmodells eines textbasierten Skripts zum Realisieren der Workflow-Aufgabe; und
Interpretieren und Ausführung (S304), durch das Skript-Engine-Modul (230), des Skripts mittels einer Skript-Engine (230).

2. Verfahren nach Anspruch 1, das ferner Folgendes umfasst:
Kommunizieren mit dem Programmierwerkzeug über Middleware (120), um visuelles Überwachen zu realisieren und einen Ausführungsprozess der Workflow-Aufgabe zu steuern; dies umfasst mindestens eines der Folgenden:
Abbilden von Zustandsdaten und Prozessdaten, die sich auf den Ausführungsprozess beziehen, auf die Middleware (120) mittels der Skript-Engine (230), so dass das Programmierwerkzeug die Zustandsdaten und die Prozessdaten erfasst;
Empfangen von Steuerinformationen, die sich auf den Ausführungsprozess beziehen, von dem Programmierwerkzeug über die Middleware (120) mittels der Skript-Engine (230).

3. Verfahren nach Anspruch 1 oder 2, wobei der Schritt des Erzeugens, auf der Grundlage des Workflow-Aufgabenmodells, eines textbasierten Skripts zum Realisieren der Workflow-Aufgabe Folgendes umfasst: Erzeugen einer textuellen Beschreibung eines importierten Funktionsblocks, einer textuellen Beschreibung eines überladenen Funktionsblocks, einer textuellen Beschreibung der Parametereinstellungen des Funktionsblocks und einer textuellen Beschreibung der Ereignisplanung.

4. Verfahren nach Anspruch 1 oder 2, wobei der Schritt des Interpretierens und Ausführens des Skripts mittels einer Skript-Engine (230) Folgendes umfasst: Instanziieren eines Funktionsblocks auf einer virtuellen Maschine, der dem mindestens einen Steuerobjekt zugeordnet ist, und Ausführen des Funktionsblocks.

5. Verfahren nach Anspruch 1, wobei das mindestens eine Steuerobjekt ein erstes Steuerobjekt und ein zweites in Zusammenarbeit betriebenes Steuerobjekt umfasst und wobei
der Schritt des Interpretierens und Ausführens des Skripts mittels einer Skript-Engine (230) Folgendes umfasst: Ausführen eines Skripts, das dem ersten Steuerobjekt zugeordnet ist, mittels einer ersten Skript-Engine auf einem ersten Runtime Executor, und Ausführen eines Skripts, das dem zweiten Steuerobjekt zugeordnet ist, mittels einer zweiten Skript-Engine auf einem zweiten Runtime Executor; und
das Verfahren ferner Folgendes umfasst: Realisieren von Steuerobjektplanung zwischen dem ersten Runtime Executor und dem zweiten Runtime Executor mittels Middleware.

6. System (100) zum Ausführen einer Workflow-Aufgabe über Steuerobjekte hinweg, das Folgendes umfasst: ein Programmierwerkzeug und mehrere Runtime Executoren (200), wobei jeder Runtime Executor Folgendes umfasst:
eine Kommunikationsschnittstelle, die dazu konfiguriert ist, von einem Programmierwerkzeug Daten der Workflow-Beschreibung zu empfangen, die einer Workflow-Aufgabe zugeordnet sind, die über mindestens ein Steuerobjekt der Steuerobjekte ausgeführt wird;
einen Parser (210), der dazu konfiguriert ist, aus den Daten der Workflow-Beschreibung ein Workflow-Aufgabenmodell zu extrahieren, das dem mindestens einen Steuerobjekt zugeordnet ist,
wobei das Workflow-Aufgabenmodell mehrere Funktionsblöcke beschreibt, die dem mindestens einen Steuerobjekt zugeordnet sind, und eine Verbindungsbeziehung zwischen den mehreren Funktionsblöcken,
wobei der Parser (210) ferner dazu konfiguriert ist, die Funktionsblöcke und die Verbindungsbeziehung zwischen den Funktionsblöcken aus den Daten der Workflow-Beschreibung zu parsen,
wobei jeder Funktionsblock einem spezifischen Runtime Executor der mehreren Runtime Executoren und einem Steuerobjekt der Steuerobjekte zugeordnet ist und die Verbindungsbeziehung zwischen den Funktionsblöcken eine kollaborative Beziehung zwischen den Runtime Executoren angibt;
einen Skriptgenerator (220), der dazu konfiguriert ist, auf der Grundlage des Workflow-Aufgabenmodells ein textbasiertes Skript für das Realisieren der Workflow-Aufgabe zu erzeugen; und
ein Skript-Engine-Modul (230), das dazu konfiguriert ist, das Skript zu interpretieren und auszuführen.

7. Einrichtung nach Anspruch 6,
wobei die Einrichtung mit dem Programmierwerkzeug über Middleware (120) kommuniziert, um das Überwachen zu realisieren und einen Ausführungsprozesses der Workflow-Aufgabe zu steuern, und dies mindestens eines der Folgenden umfasst:
das Skript-Engine-Modul (230), das dazu konfiguriert ist, Zustands- und Prozessdaten, die sich auf den Ausführungsprozess beziehen, auf die Middleware abzubilden, so dass das Programmierwerkzeug die Zustands- und Prozessdaten erfasst;
das Skript-Engine-Modul, das dazu konfiguriert ist, Steuerinformationen bezüglich des Ausführungsprozesses von dem Programmierwerkzeug über die Middleware zu empfangen.

8. Einrichtung nach Anspruch 6 oder 7, wobei das mindestens eine Steuerobjekt ein erstes Steuerobjekt und ein zweites in Zusammenarbeit betriebenes Steuerobjekt umfasst, und wobei das Skript-Engine-Modul ein erstes Skript-Engine-Modul auf einem ersten Runtime-Executor ist und dazu konfiguriert ist, ein Skript auszuführen, das dem ersten Steuerobjekt zugeordnet ist, und ein Skript, das dem zweiten Steuerobjekt zugeordnet ist, mittels eines zweiten Skript-Engine-Moduls auf einem zweiten Runtime Executor ausgeführt wird; und
Steuerobjektplanung zwischen dem ersten Runtime Executor und dem zweiten Runtime Executor mittels Middleware realisiert wird.

9. Einrichtung nach einem der Ansprüche 6 bis 8, wobei das Skript Folgendes umfasst: eine textuelle Beschreibung eines importierten Funktionsblocks, eine textuelle Beschreibung eines überladenen Funktionsblocks, eine textuelle Beschreibung der Parametereinstellungen des Funktionsblocks und eine textuelle Beschreibung der Ereignisplanung.

10. Einrichtung nach einem der Ansprüche 6 bis 9, wobei das Skript-Engine-Modul (230) dazu konfiguriert ist, auf einer virtuellen Maschine einen Funktionsblock zu instanziieren, der dem mindestens einen Steuerobjekt zugeordnet ist, und den Funktionsblock auszuführen.

11. Nicht transitorisches, maschinenlesbares Speichermedium, mit darauf gespeicherten ausführbaren Anweisungen, die, wenn sie ausgeführt werden, mindestens einen Prozessor veranlassen, das Verfahren nach einem der Ansprüche 1 bis 5 auszuführen.

12. Computerprogramm, das eine computerausführbare Anweisung umfasst, die, wenn sie ausgeführt wird, mindestens einen Prozessor veranlasst, das Verfahren nach einem der Ansprüche 1 bis 5 auszuführen.

13. Computerprogrammprodukt, das konkret auf einem computerlesbaren Speichermedium gespeichert ist und eine computerausführbare Anweisung umfasst, die, wenn sie ausgeführt wird, mindestens einen Prozessor veranlasst, das Verfahren nach einem der Ansprüche 1 bis 5 auszuführen.

## Revendications

1. Procédé (300) d'exécution, dans un système, d'une tâche de flux de travail à travers des objets de commande, le système comprenant un outil de programmation et de multiples exécuteurs (200) d'exécution, chaque exécuteur d'exécution comprenant une interface de communication, un analyseur syntaxique (210), un générateur (220) de scripts et un module moteur (230) de scripts, le procédé comprenant :
la réception (S301), en provenance de l'outil de programmation, de données de description de flux de travail associées à une tâche de flux de travail exécutée sur au moins un objet de commande parmi les objets de commande ;
l'extraction (S302), à partir des données de description de flux de travail, d'un modèle de tâche de flux de travail associé à l'objet ou aux objets de commande,
le modèle de tâche de flux de travail décrivant de multiples blocs de fonction associés à l'objet ou aux objets de commande, et une relation de connexion entre les multiples blocs de fonction,
l'analyseur syntaxique (210) analysant les blocs de fonction et la relation de connexion entre les blocs de fonction à partir des données de description de flux de travail,
chaque bloc fonctionnel étant associé à un exécuteur d'exécution spécifique parmi les exécuteurs d'exécution multiples et à un objet de commande parmi les objets de commande, et la relation de connexion entre les blocs fonctionnels indiquant une relation de collaboration entre les exécuteurs d'exécution ;
la génération (S303), par le générateur (220) de scripts, sur la base du modèle de tâche de flux de travail, d'un script à base de texte pour réaliser la tâche de flux de travail ; et
l'interprétation et l'exécution (S304), par le module moteur (230) de scripts, du script au moyen d'un moteur (230) de scripts.

2. Procédé selon la revendication 1, comprenant en outre :
une communication avec l'outil de programmation par l'intermédiaire d'un logiciel médiateur (120) afin de réaliser une surveillance visuelle et une commande d'un processus d'exécution de la tâche de flux de travail ; ce qui comprend au moins l'un des éléments suivants :
association, au logiciel médiateur (120), de données d'état et de données de processus relatives au processus d'exécution au moyen du moteur (230) de scripts, de sorte que l'outil de programmation acquiert les données d'état et les données de processus ;
réception d'informations de commande relatives au processus d'exécution en provenance de l'outil de programmation via le logiciel médiateur (120) au moyen du moteur (230) de scripts.

3. Procédé selon la revendication 1 ou 2, l'étape de génération, sur la base du modèle de tâche de flux de travail, d'un script à base de texte pour réaliser la tâche de flux de travail, comprenant : la génération d'une description textuelle d'un bloc de fonction importé, d'une description textuelle d'un bloc de fonction surchargé, d'une description textuelle de réglages de paramètres de bloc de fonction, et d'une description textuelle d'une planification d'événements.

4. Procédé selon la revendication 1 ou 2, l'étape d'interprétation et d'exécution du script au moyen d'un moteur (230) de scripts comprenant : l'instanciation, sur une machine virtuelle, d'un bloc de fonction associé à l'objet ou aux objets de commande, et l'exécution du bloc de fonction.

5. Procédé selon la revendication 1, l'objet ou les objets de commande comprenant un premier objet de commande et un second objet de commande mis en œuvre en coopération, et
l'étape d'interprétation et d'exécution du script au moyen d'un moteur (230) de scripts comprenant : l'exécution d'un script associé au premier objet de commande au moyen d'un premier moteur de scripts sur un premier exécuteur d'exécution, et l'exécution d'un script associé au second objet de commande au moyen d'un second moteur de scripts sur un second exécuteur d'exécution ; et
le procédé comprenant en outre : la réalisation, au moyen d'un logiciel médiateur, d'une planification d'objets de commande entre le premier exécuteur d'exécution et le second exécuteur d'exécution.

6. Système (100) d'exécution d'une tâche de flux de travail sur des objets de commande, comprenant : un outil de programmation et de multiples exécuteurs (200) d'exécution, chaque exécuteur d'exécution comprenant :
une interface de communication, configurée pour recevoir, en provenance d'un outil de programmation, des données de description de flux de travail associées à une tâche de flux de travail exécutée sur au moins un objet de commande parmi les objets de commande ;
un analyseur syntaxique (210), configuré pour extraire, à partir des données de description de flux de travail, un modèle de tâche de flux de travail associé à l'objet ou aux objets de commande, le modèle de tâche de flux de travail décrivant de multiples blocs de fonction associés à l'objet ou aux objets de commande, et une relation de connexion entre les multiples blocs de fonction,
l'analyseur syntaxique (210) étant en outre configuré pour analyser les blocs de fonction et la relation de connexion entre les blocs de fonction à partir des données de description de flux de travail,
chaque bloc fonctionnel étant associé à un exécuteur d'exécution spécifique parmi les exécuteurs d'exécution multiples et à un objet de commande parmi les objets de commande, et la relation de connexion entre les blocs fonctionnels indiquant une relation de collaboration entre les exécuteurs d'exécution ;
un générateur (220) de scripts, configuré pour générer, sur la base du modèle de tâche de flux de travail, un script à base de texte pour réaliser la tâche de flux de travail ; et
un module moteur (230) de scripts, configuré pour interpréter et exécuter le script.

7. Appareil selon la revendication 6,
l'appareil communiquant avec l'outil de programmation par l'intermédiaire d'un logiciel médiateur (120) pour réaliser la surveillance et la commande d'un processus d'exécution de la tâche de flux de travail, ce qui comprend au moins l'un des éléments suivants :
le module de moteur (230) de scripts est configuré pour associer, au logiciel médiateur, des données d'état et des données de processus relatives au processus d'exécution, de sorte que l'outil de programmation acquiert les données d'état et les données de processus ;
le module de moteur de scripts est configuré pour recevoir des informations de commande relatives au processus d'exécution en provenance de l'outil de programmation via le logiciel médiateur.

8. Appareil selon la revendication 6 ou 7, l'objet ou les objets de commande comprenant un premier objet de commande et un second objet de commande mis en œuvre en coopération, et le module de moteur de scripts étant un premier module de moteur de scripts sur un premier exécuteur d'exécution et étant configuré pour exécuter un script associé au premier objet de commande, et un script associé au second objet de commande étant exécuté au moyen d'un second module moteur de scripts sur un second exécuteur d'exécution ; et
une planification d'objets de commande entre le premier exécuteur d'exécution et le second exécuteur d'exécution étant réalisée au moyen d'un logiciel médiateur.

9. Appareil selon l'une quelconque des revendications 6 à 8, le script comprenant : une description textuelle d'un bloc de fonction importé, une description textuelle d'un bloc de fonction surchargé, une description textuelle de réglages de paramètres de bloc de fonction, et une description textuelle d'une planification d'événements.

10. Appareil selon l'une quelconque des revendications 6 à 9, le module de moteur (230) de scripts étant configuré pour instancier, sur une machine virtuelle, un bloc de fonction associé à l'objet ou aux objets de commande, et exécuter le bloc de fonction.

11. Support de stockage non transitoire lisible par machine, sur lequel est stockée une instruction exécutable qui, lorsqu'elle est exécutée, amène au moins un processeur à exécuter le procédé selon l'une quelconque des revendications 1 à 5.

12. Programme informatique, comprenant une instruction exécutable par ordinateur qui, lorsqu'elle est exécutée, amène au moins un processeur à exécuter le procédé selon l'une quelconque des revendications 1 à 5.

13. Produit-programme d'ordinateur stocké de manière tangible sur un support de stockage lisible par ordinateur et comprenant une instruction exécutable par ordinateur qui, lorsqu'elle est exécutée, amène au moins un processeur à exécuter le procédé selon l'une quelconque des revendications 1 à 5.
